# EUROPÄISCHE PATENTSCHRIFT

(11) **EP 1 687 356 B1**
(45) Veröffentlichungstag und Bekanntmachung des Hinweises auf die Patenterteilung: **27.05.2009**
(21) Anmeldenummer: 04803155.3
(22) Anmeldetag: 17.11.2004
(51) Int. Cl.: C08G 69/16

(54) **VERFAHREN ZUR KONTINUIERLICHEN HERSTELLUNG VON POLYAMIDEN MIT VERBESSERTEN FLIESSEIGENSCHAFTEN**
METHOD FOR THE CONTINUOUS PRODUCTION OF POLYAMIDES HAVING IMPROVED RHEOLOGICAL PROPERTIES
PROCEDE DE PRODUCTION EN CONTINU DE POLYAMIDES À APTITUDES À L'ECOULEMENT AMELIOREES

(30) Priorität: 21.11.2003 DE 10354606
(43) Veröffentlichungstag der Anmeldung: 09.08.2006
(73) Patentinhaber: LANXESS Deutschland GmbH, 51369 Leverkusen (DE)
(72) Erfinder: JOACHIMI, Detlev, 47800 Krefeld (DE); HUBERTUS VAN MULLEKOM, Robert, 5911 AL Venlo (DE); PERSIGEHL, Peter, 40878 Ratingen (DE); SCHÄFER, Marcus, 47829 Krefeld (DE); ULRICH, Ralph, 40882 Ratingen (DE)
(86) Internationale Anmeldenummer: PCT/EP2004/013018
(87) Internationale Veröffentlichungsnummer: WO 2005/049693

(56) Entgegenhaltungen:
- WO-A-00/39192
- WO-A-01/96441
- US-A- 6 160 080
- US-B1- 6 525 166

## Beschreibung

Die vorliegende Erfindung betrifft ein Verfahren zur kontinuierlichen Herstellung von sternförmig verzweigten Polyamiden. Polyamidformmassen enthaltend diese Polyamide zeichnen sich durch verbesserten Fließeigenschaften aus.

Polyamide zeichnen sich durch eine Vielzahl vorteilhafter Eigenschaften wie z.B. hohe Zähigkeit, hohe Temperaturfestigkeit u.a. aus, die ihnen im Bereich der technischen Thermoplaste einen festen Platz im Markt sichern. Diese Basiseigenschaften des Polymeren werden im Allgemeinen durch die Zugabe von Zusatzstoffen oder Additiven modifiziert. Polymeres und Additive zusammen ergeben die sogenannte Formmasse. Polyamidformmassen kommen in vielen Anwendungen zum Einsatz. Beispielhaft genannt seien Spritzgussteile z.B. für den Automobilmarkt oder Extrudate wie Folien oder Hohlkörper für den Verpackungsbereich.

Ein Überblick über die gängigen Verfahren zur Herstellung von Polyamiden kann dem Kunststoff Handbuch 3/4, Polyamide, Becker/Braun, Carl Hanser Verlag München Wien, 1998, S. 41-48, entnommen werden. Die Verfahren können aufgeteilt werden in kontinuierlichen und nichtkontinuierlichen Prozesse. Zu den kontinuierlichen Prozessen zählt beispielsweise die industrielle Herstellung von PA 6 in einem VK-Rohr (VK = vereinfacht kontinuierlich), in dem flüssiges Caprolactam mit ca. 1 bis 4 % Wasser von oben einem oder einer Reihe von vertikalen Rohrreaktoren zugeführt wird. Überschüssiges Wasser wird abdestilliert. Die Polymerisation wird bei Temperaturen zwischen 240°C und 270°C und einer Verweilzeit von 15 h bis zu 30 h durchgeführt, Die Schmelze wird zunächst beispielsweise mittels Unterwassergranulierung oder nach vorheriger Abkühlung mittels Stranggranulierung granuliert. Eine deutliche Beschleunigung des Verfahrens um einige Stunden lässt sich durch Vorschalten einer Druckstufe erreichen, in dem die geschwindigkeitsbestimmende Spaltung von Caprolactam bei erhöhtem Druck unter ansonsten ähnlichen Bedingungen durchgeführt wird.

Aus thermodynamischen Gründen ist bei den oben beschriebenen Verfahren der Umsatz begrenzt. So liegen im Gleichgewicht bei 270°C neben Polyamid noch ca. 10 % Restgehalt an niedermolekularen Spezies vor, im wesentlichen Caprolactam und zyklische Oligomere. Dieser Restgehalt wirkt sich auf weitere Anwendungen störend aus. Daher ist es notwendig, den Restgehalt im Produkt zu minimieren. Dies kann beispielsweise durch wässrige Extraktion geschehen. Dazu wird das Granulat in heißem Wasser extrahiert (EP-A 1 030 872, EP-A 0 792 672). Auf diesem Wege können neben dem Caprolactam auch nennenswerte Mengen an Oligomeren entfernt werden. Das Granulat nimmt bei diesem Vorgang erhebliche Mengen an Wasser (bis zu 12 %) auf. Um eine Verarbeitung zu ermöglichen, muss dem Extraktionsschritt eine Trocknung folgen (EP-A 0 732 351, EP-A 0 407 876). Dabei wird das aufgenommene Wasser mit heißem Inertgas (Stickstoff) wieder entfernt.

Anschließend muss auch das Extraktionswasser aufgearbeitet werden, da ein Verwerfen des Caprolactam und der Oligomeren wirtschaftlich nicht vertretbar ist (DE-A 19 801 267, EP-A 0 048 340, DE-A 2 501 348). Zu diesem Zweck wird die wässrige Extraktionslösung in entsprechenden mehrstufigen Eindampfanlagen soweit aufkonzentriert, dass sie wieder in der Reaktion eingesetzt werden kann.

Bei dem diskontinuierlichen Herstellung von Polyamiden handelt es sich beispielsweise um die Produktion in Autoklaven mit anschließender Entgasung, beispielsweise im Vakuum, zur weitgehenden Entfernung von Monomeren und Oligomeren. Diese werden mit Caprolactam gemischt und der nächsten Polymerisation wieder zugeführt (siehe auch Kunststoff Handbuch 3/4, Polyamide, Becker/Braun, Carl Hanser Verlag München Wien, 1998 (S. 67)).

Polyamide werden bevorzugt in einem kontinuierlichen Prozess hergestellt, weil dieser zu einheitlicheren Produkten, konstanterer Qualität, längeren Standzeiten und höheren Durchsätzen bei geringeren Arbeitsaufwand und geringeren Rüst- und Reinigungszeiten führt.

Zur mechanischen Verbesserung von Kunststoffen beispielsweise Polyamid beinhalten diese Verbindungen oft Füllstoffe, beispielsweise Glasfasern, Wollastonit, Kaolin oder Calciumcarbonat. Diese Füllstoffe können zu einer Erhöhung der Schmelzviskosität der Formmasse führen und begrenzen die Fließfähigkeit dieser Formmassen. Eine hohe Fließfähigkeit ist für die gleichmäßige und vollständige Füllung einer Form, sowie für die Reduktion von Zykluszeiten und Fülldrucke bei der Spritzgießverarbeitung vorteilhaft. Um die hohe Fließfähigkeit der Polyamidformmassen bei der Spritzgießverarbeitung zu gewährleisten, ist ein möglichst geringer Schmelzeviskosität des eingesetzten Polyamidharzes erforderlich.

Die Verringerung der Schmelzeviskosität eines Polyamidharzes kann erfolgen über eine Verringerung des Molekulargewichtes, wie z.B. beschrieben im Patentschrift US-A 5 274 033. Nachteilig ist aber der negative Einfluss auf mechanische Eigenschaften des Werkstoffes, beispielsweise die Verringerung der Schlagzähigkeit, die mit dem verringerten Molekulargewicht einhergeht.

Aus Schaefgen, Flory, J. Am. Chem. Soc, 70 (1948), 2709-2718 ist die Herstellung von sternförmig verzweigten Polyamiden aus Caprolactam, Wasser und einem Verzweiger mit 4 oder mehr Carbonsäuregruppen bekannt. Die beschriebenen Polyamide zeigen eine Verringerung der Schmelzeviskosität im Vergleich mit einem linearen Polyamid mit einem vergleichbaren Molekulargewicht.

Neben den oben genannten Literaturstelle ist die Herstellung von sternförmig verzweigten Polyamiden aus einem Verzweiger mit 3 oder mehr Carbonsäuregruppen unter anderem bekannt aus US-A 2 524 045, US-A 2 524 046, US-A 2 863 857 und DE-A 3 917 927. Außerdem lassen sich sternförmig verzweigten Polyamiden auch mit anderen Verzweigern herstellen, z.B. aus Molekülen mit 3 oder mehr Acyllactamgruppen wie beschrieben in Mathias, Sikes, ACS Symp. Series 367 (1988), 66-76, JP 252093 (identisch mit EP-A 0 156 079) und EP-A 0 377 259, aus Molekülen mit 3 oder mehr Oxazolingruppen wie z.B. beschrieben in US-A 4 599 400 und US-A 4 690 985, und aus Molekülen mit 3 oder mehr Aminogruppen wie z.B. beschrieben in US-A 2 615 862 und US-A 5 254 668.

Aus US-A 3 549 601 ist bekannt, dass über Einbau eines Verzweigers ein PA 66 mit reduzierter Schmelzeviskosität, hervorragende Spritzgießverarbeitbarkeit und gleichen mechanischen Eigenschaften im Vergleich mit einem linearen PA 66 hergestellt werden kann. EP-A 0 774 480 offenbart die kontinuierliche Herstellung von verzweigtem PA 66 durch Zugabe von beispielsweise Trimesinsäure. Der Einbau des Verzweigers erfolgt hier aber erst nach der Herstellung des Präpolymeren in einem Zweischneckenextruder.

Aus Warakomski, Polymer Preprints, 30 (1989) 117-118 ist bekannt, dass ein sternförmig verzweigtes PA 6, hergestellt aus einem Verzweiger mit 6 Aminogruppen, sich von einem linearen PA 6 durch eine signifikante Reduktion der Schmelzeviskosität unterscheidet, während andere Eigenschaften, z.B. mechanische Eigenschaften und Permeabilitätseigenschaften, sich nicht oder nur geringfügig verändern.

Aus JP-A 4-121310 / 5-062896 (US-A 5346984) ist außerdem bekannt, dass ein sternförmig verzweigtes PA 6, hergestellt aus einem Verzweiger mit mehr als 3 Carbonsäuregruppen, eine signifikante Reduktion der Schmelzeviskosität aufweist, während die übrigen Eigenschaften sich nicht oder nur geringfügig verändern.

Aus diesen Beispielen geht hervor, dass zur Verbesserung der Fließfähigkeit einer Polyamidformmasse, die Reduktion der Schmelzeviskosität (eines PA 6-Harzes) bevorzugt über die bekannte sternförmige Verzweigung der Polyamidketten erfolgen soll, weil auf diese Art und Weise der wünschenswerte Erhalt der übrigen Polymereigenschaften gegeben ist.

Dieser Lösungsansatz ist deswegen Bestandteil vieler Patentanmeldungen z.B. WO-A 96/35739, WO-A 97/46747, WO-A 97/24388 und WO-A 99/64496.

WO-A 96/35739 offenbart die Verwendung von 1,3,5-Triazin-2,4,6-tris(aminocapronsäure) und 4-Aminomethyl-1,1-octandiamin zur Synthese verzweigter Polyamide. Obwohl gängige Verfahren zur Herstellung von linearen Polyamiden beansprucht werden, wurden nur diskontinuierliche Herstellverfahren beschrieben.

WO-A 97/46747 offenbart die Verwendung von 1,3,5-Triazin-2,4,6-tris(aminocapronsäure) und 1,3,5-Triazin-2,2,4,4,6,6-hexa(aminocapronsäure) zur Synthese verzweigter Polyamide. Die Reaktion findet in einem 5 Liter-Reaktor statt.

US-A 5 254 668 beschreibt die Verwendung von Jeffamineen beispielsweise Jeffamine T 403, WO 97/24388 beschreibt die Verwendung von Jeffamine T 403 (Fa. Huntsman), 2,2,6,6-Tetra-(β-carboxyethyl)cyclohexanon, Propylendiamintetraessigsäure (PDTA) und Verbindungen mit der Struktureinheit

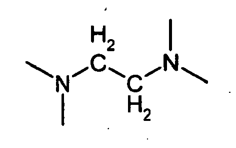

Die Reaktionen werden in einem Autoklaven durchgeführt.

In WO-A 99/64496 wird die Verwendung von 2,2,6,6-Tetra-(β-carboxyethyl)cyclohexanon, Propylendiamintetraessigsäure (PDTA) und Verbindungen mit der Struktureinheit

R₁-[A-Z]ₘ

offenbart, wobei R₁ ein Kohlenwasserstoffrest mit mindestens 2 Kohlenstoffatomen ist, A eine kovalente Bindung oder ein aliphatischer Kohlenwasserstoffrest mit 1 bis 6 Kohlenstoffatomen ist, Z ein primärer Aminrest oder eine Carbongruppe ist und m eine ganze Zahl zwischen 3 und 8 darstellt. Auch diese Reaktion zur Herstellung verzweigter Polyamide wird in einem Autoklav durchgeführt.

Genannt seien hier auch WO 01/96441 A worin modifizierte Polyamide durch Extrusion zweier Polyamide und einer polyfunktionalen Verbindung offenbart werden. In US 6 525 166 B1 und US-A 6 160 080 wird die Beeinflussung von Fließeigenschaften von Polyamiden aus Caprolactam durch 2,2,6,6-tetra-(β-Carboxyethyl)-cyclohexanon beschrieben. WO 00/39192 A schließlich offenbart ein kontinuierliches Verfahren zur Herstellung verzweigter Polyamide aus Caprolactam und einem Triamin in einem zweistufigen, vertikalen Zylinderrohr mit einer Druck- und Expansionsstufe.

Nachteil der oben erwähnten Patenten und Literaturstellen ist die Herstellung des sternförmig verzweigten Polyamids in einem diskontinuierlichen Autoklavenprozess. Eine Übertragung von Autoklavenreaktionen auf einen kontinuierlichen Prozess ist nicht direkt möglich.

Polyamide werden bevorzugt in einem kontinuierlichen Prozess hergestellt, weil dieser zu einheitlicheren Produkten, konstanterer Qualität, längeren Standzeiten und höheren Durchsätzen bei geringeren Arbeitsaufwand und geringeren Rüst- und Reinigungszeiten führt. Besonders vorteilhaft ist es, wenn dem Fachmann bekannte kontinuierliche Verfahren zur Herstellung von Polyamiden auch zur Herstellung der sternförmig verzweigten Polyamiden benutzt werden können. Der kontinuierliche Einsatz von Zusatzstoffen, beispielsweise Verzweiger und Kettenabbrecher, in einen kontinuierlichen Polymerisationsprozess ist vorteilhaft, da eine exakte Dosierung und gleichmäßige Verteilung der Zusatzstoffe möglich ist. Dies erfolgt besonders vorteilhaft, wenn die Zusatzstoffe in flüssiger Form vorliegen.

Aufgabe der Erfindung war es daher, ein kontinuierliches Verfahren zur Herstellung von sternförmig verzweigten Polyamiden mit fließverbesserten Eigenschaften zu entwickeln.

Mehrfachcarbonsäuren wie Ethylendiamintetraessigsäure (EDTA) oder Propylendiamtetraessigäure (PDTA) und seine Derivaten sind hochschmelzende Verbindungen, die eine Dosierung im flüssigen Zustand nicht zersetzungsfrei zulassen. Eine Alternative ist die Zudosierung dieser Verzweiger in Lösungen aus Wasser, Caprolactam oder Mischungen von beiden. Bei der Polymerisation von Caprolactam sollte vorzugsweise nur Lactam und Wasser als Lösungsmittel dienen, wobei die Menge an Wasser durch die zulässige Wasserbelastung des Gesamtsystem limitiert ist. Die Löslichkeit von vielen Mehrfachcarbonsäuren reicht aber weder in Wasser, Lactam oder einer Mischung von beiden aus. Eine kontinuierliche Prozessführung mit dem Fachmann bekannten Verfahren zur Herstellung von verzweigten Polyamiden mit EDTA als Kettenverzweiger ist nicht möglich, da die benötigte Menge EDTA nicht in den bei dem für den kontinuierlichen Herstellung von Polyamiden üblichen Mengen an Wasser oder Mischungen von Wasser und Caprolactam löslich ist. Die Salze der EDTA, beispielsweise das Dinatriumsalz, sind wasserlöslich, jedoch zeigen diese Salze unter den gegebenen Bedingungen keine Reaktivität.

Die einfache Übertragung des Autoklavenprozesses zur Herstellung von verzweigten Polyamiden unter Verwendung von Jeffamineen auf den kontinuierlichen Prozess ist ebenfalls nicht ohne weiteres möglich, da Jeffaminee bei der Entspannung in das VK-Rohr zum Aufschäumen der Schmelze führen und damit keine sichere Reaktionsführung gewährleistet ist.

Überraschenderweise wurde gefunden, dass eine kontinuierliche Herstellung von verzweigten Polyamiden mit dem Fachmann bekannten kontinuierlichen Verfahren nur bei einem einzigen der oben beschriebenen Verbindungen möglich ist. 2,2,6,6-Tetra-(β-carboxyethyl)cyclohexanon (TCCH) ist zur Synthese von verzweigten Polyamiden geeignet.

Gegenstand der Anmeldung ist daher ein Verfahren zur Herstellung von Polyamiden aus Lactamen und/oder Aminocarbonsäuren, **dadurch gekennzeichnet, dass**
a) das Verfahren kontinuierlich betrieben wird und
b) 2,2,6,6-Tetra(β-carboxyethyl)-cyclohexanon
   eingesetzt wird.

Das Additiv wird bevorzugt in Mengen zwischen 0,1 Mol% und 1 Mol-%, besonders bevorzugt zwischen 0,1 Mol-% und 0,5 Mol-%, bezogen auf die eingesetzte Menge Monomer eingesetzt.

Gegebenenfalls können zusammen mit 2,2,6,6-TCCH noch weitere Initiatoren, Starter und oder Kettenregler hinzugefügt werden, um das Molekulargewicht oder die Molekulargewichtsverteilung des Polyamids einzustellen.

Beispiele von weiteren Kettenreglern sind aliphatische oder aromatische ein- oder zweiwertige Carbonsäuren, die sich im eingesetzten Wasser/Lactamgemisch lösen.

Bevorzugt handelt es sich bei weiteren Kettenreglern um Propionsäure oder Adipinsäure.

Gegenstand der Erfindung ist weiterhin ein Verfahren zur Herstellung von verzweigten Polyamiden aus Lactamen und/oder Aminocarbonsäuren, **dadurch gekennzeichnet, dass**
a) das Verfahren kontinuierlich betrieben wird und
b) 2,2,6,6-Tetra(β-carboxyethyl)-cyclohexanon
   eingesetzt wird.
   Gegenstand der Erfindung ist weiterhin ein Verfahren zur Herstellung von Polyamiden aus Lactamen und/oder Aminocarbonsäuren, wobei noch
c) weitere Kettenregler, Starter und/oder Initiatoren eingesetzt werden.

Gegenstand der Erfindung ist weiterhin ein Verfahren zur Herstellung von Polyamiden, wobei
b) in Mengen zwischen 0,01 Mol-% und 1 Mol-% bezogen auf die eingesetzte Menge Monomer eingesetzt wird.

Gegenstand der Erfindung ist weiterhin ein Verfahren zur Herstellung von Polyamiden, wobei
b) in Mengen zwischen 0,1 Mol-% und 0,5 Mol-% bezogen auf die eingesetzte Menge Monomer eingesetzt wird.

Gegenstand der Erfindung ist weiterhin ein Verfahren zur Herstellung von Polyamiden, **dadurch gekennzeichnet, dass**
b) und gegebenenfalls c) als wässrige Lösung der Polymerisation zugeführt werden.

Gegenstand der Erfindung ist weiterhin ein Verfahren zur Herstellung von Polyamiden, **dadurch gekennzeichnet, dass**
b) oder gegebenenfalls c) als Lösung in einer Mischung aus Wasser und mindestens einem Lactam der Polymerisation zugeführt werden.

Gegenstand der Erfindung ist weiterhin ein Verfahren zur Herstellung von Polyamiden, **dadurch gekennzeichnet, dass** die Lösung gemäß vorigem Absatz einer Druckstufe zugeführt wird.

Gegenstand der Erfindung ist weiterhin ein Verfahren zur Herstellung von Polyamiden, wobei
b) in Mengen zwischen 0,1 Mol-% und 0,5 Mol-%, und Adipinsäure in Mengen von 0,01 Mol-% bis 0,2 Mol-% bezogen auf die eingesetzte Menge Lactam und/oder Aminocarbonsäure eingesetzt werden.

Gegenstand der Erfindung ist weiterhin ein Verfahren zur Herstellung von Polyamiden, wobei
b) in Mengen zwischen 0,1 Mol-% und 0,5 Mol-%, und Propionsäure in Mengen von 0,01 Mol-% bis 0,2 Mol-% bezogen auf die eingesetzte Menge Lactam und/oder Aminocarbonsäure, bevorzugt 6-Aminohexansäure, eingesetzt werden.

Gegenstand der Erfindung ist weiterhin ein Verfahren zur Herstellung von Polyamiden, wobei es sich bei Lactam um Caprolactam handelt.

Gegenstand der Erfindung ist weiterhin ein Verfahren zur Herstellung von Polyamiden unter Verwendung von 2,2,6,6-Tetra(β-carboxyethyl)-cyclohexanon als Mittel zur Verbesserung der Fließeigenschaften von Polyamiden.

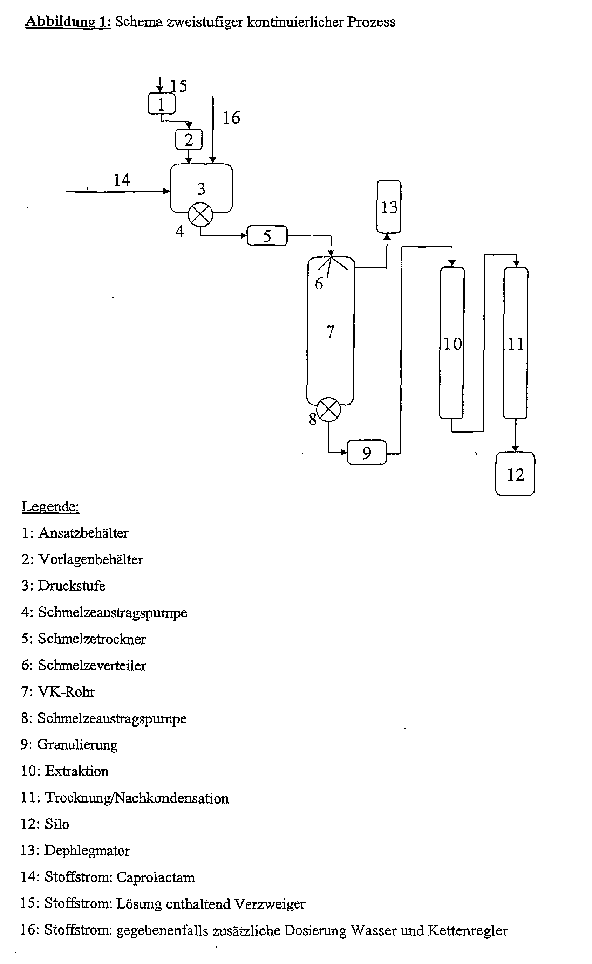

Die Herstellung der Polyamide erfolgte bevorzugt nach einem zweistufigen Verfahren, das in Abbildung 1 dargestellt ist. In einem Ansatzbehälter (1) wird die Lösung enthaltend Verzweiger, Wasser, Caprolactam und Kettenregler hergestellt, die über einen Vorlagebehälter (2) der Druckstufe (3) zugeführt wird. Alternativ kann die Lösung auch in den Caprolactamzulaufstrom (14) zugeführt werden. In die Druckstufe wird Caprolactam zugespeist (14), zusätzlich können zu der den Verzweiger enthaltenden Lösung (15) weitere Zusatzstoffe beispielsweise Wasser und Kettenregler über eine weitere Leitung (16) dosiert werden. Über eine Schmelzeaustragspumpe (4) wird das Vorpolymerisat über einen Schmelzetrockner (5) in ein VK-Rohr (7) entspannt. Die Schmelze kann dabei vorzugsweise über einen Schmelzeverteiler (6) laufen. Flüchtige Komponenten werden über einen Dephlegmator (13) ausgeschleust. Eine zweite Schmelzeaustragspumpe (8) führt die Schmelze zur Granulierung (9), wobei es sich um eine Stranggranulierung oder eine Unterwassergranulierung handeln kann. Das Granulat wird anschließend extrahiert (10), getrocknet (11) und in einen Silo überführt (12). Die Stoffströme und Temperaturen sind in den Beispielen beschrieben.

### Beispiele

### Chemikalien:

### Jeffamine D-2000, Fa. Huntsmann

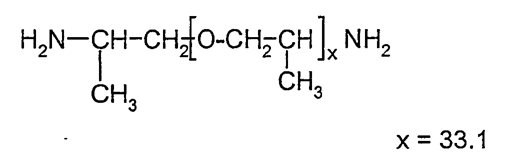

### 2,2,6,6-Tetra-(β-carboxyethyl)-cyclohexanon:

Die Synthese des Verzweigers 2,2,6,6-Tetra-(b-carboxyethyl)-cyclohexanon (TCCH) ist in der Literatur beschrieben und wurde analog durchgeführt *(*Bruison, H.A.; Riener, T. W. "The Chemistry of Acrylonitrile II - Reactions with Ketones", J. Am. Chem. Soc. 64 (1942), 2850*.)*: 2,2,6,6-Tetra-(β-carboxyethyl)-cyclohexanone. Eine Mischung aus 1900 g Wasser, 196 g KOH und 217 g 2,2,6,6-Tetra(β-cyanoethyl)-cyclohexanone wurden gerührt und unter Rückfluss für 5 Stunden gekocht. Die klare Lösung wurde mit 350 g konzentrierter Salzsäure angesäuert und auf 15 bis 20°C abgekühlt, wobei das Produkt kristallisierte. Nach Filtern und Waschen mit Eiswasser: Ausbeute: 199 g luftgetrocknete weiße Kristalle. Nach Umkristallisation aus Wasser bilden sich farblose Nadeln mit Schmelzpunkt 179-180°.

### Vergleichsbeispiel 1:

Die Herstellung des Polyamides erfolgt in einer zweistufigen kontinuierlichen Fahrweise bestehend aus Druckstufe und Entspannungsstufe. Der Lactamstrom wird bei 240°C der Druckstufe zugeführt. Die Zugabe von Wasser erfolgt separat in die Druckstufe. Die Verweilzeit in der Druckstufe beträgt 2 Stunden. Die Produkttemperatur am Austritt wird über einen Schmelzetrockner eingestellt. Die Entspannungsstufe wird im Kopf bei 280°C und im unteren Bereich bei 250°C betrieben. Die Verweilzeit der Schmelze in der Entspannungsstufe beträgt 12 Stunden.

| | |
|---|---|
| Durchsatz: | 8 kg/h |
| Laktameintritt Druckstufe: | 240°C |
| Verweilzeit Druckstufe: | 2 h |
| Produkttemperatur Austritt Druckstufe: | 275°C |
| Produkttemperatur NK1, oben: | 280°C |
| Produkttemperatur NK1, unten: | 250°C |
| Wasserbelastung: | 3,6 % |

Nach Erreichen der Stabilfahrweise wird eine 30 kg Granulatprobe entnommen, extrahiert und getrocknet.

### Vergleichsbeispiel 2:

| | |
|---|---|
| Durchsatz: | 6 kg/h |
| Laktameintritt Druckstufe: | 240°C |
| Verweilzeit Druckstufe: | 2 h |
| Produkttemperatur Austritt Druckstufe: | 275°C |
| Produkttemperatur NK1, oben: | 280°C |
| Produkttemperatur NK1, unten: | 250°C |
| Wasserbelastung: | 2 % |

Dosierung von 1456 g/h einer Lösung aus 750 g Jeffamine D-2000, Fa. Huntsmann, 129 g Wasser, 518 g Caprolactam und 59 g Adipinsäure.

Der Versuch musste abgebrochen werden, da keine stabile Fahrweise möglich war.

### Beispiel 1:

Beispiel 1 wird analog zum Vergleichsbeispiel 1 durchgeführt. Anstelle der Zugabe von Wasser erfolgt hier die Zugabe von 806 g/h einer Lösung aus 110 g TCCH und 10 g Adipinsäure gelöst in 240 g Wasser und 446 g Lactam.

### Beispiel 2:

Beispiel 2 wird analog zum Vergleichsbeispiel 1 durchgeführt. Anstelle der Zugabe von Wasser erfolgt hier die Zugabe von 778,5 g/h einer Lösung aus 82 g TCCH und 10,5 g Propionsäure gelöst in 240 g Wasser und 446 g Lactam.

### Beispiel 3:

Beispiel 3 wird analog zum Vergleichsbeispiel 1 durchgeführt. Anstelle der Zugabe von Wasser erfolgt hier die Zugabe von 823 g/h einer Lösung aus 137 g TCCH gelöst in 240 g Wasser und 446 g Lactam.

### Beispiel 4:

Beispiel 4 wird analog zum Vergleichsbeispiel 1 durchgeführt. Anstelle der Zugabe von Wasser erfolgt hier die Zugabe von 807,4 g/h einer Lösung aus 117 g TCCH und 4,4 g Adipinsäure gelöst in 240 g Wasser und 446 g Lactam.

### Beispiel 5:

Beispiel 5 wird analog zum Vergleichsbeispiel 1 durchgeführt. Anstelle der Zugabe von Wasser erfolgt hier die Zugabe von 801 g/h einer Lösung aus 110 g TCCH und 5 g Propionsäure gelöst in 240 g Wasser und 446 g Lactam.

### Compoundierung:

Verwendete Komponenten
A) Polyamid gemäß Vergleichsbeispiel 1 oder einem der Beispiele 1 bis 5: 49,6 Gew.-%
B) Glasfasern (CS 7928, Handelsprodukt der Bayer AG) 50,0 Gew.-%
C) Nukleierungsmittel (5 %-ige Masterbatch von Talkum in PA6) 0,3 Gew.-%
D) Entformungsmittel (Montanesterwachs): 0,1 Gew.-%

Polyamid A) und die Komponenten C) und D) werden gemischt und in einem kontinuierlich arbeitenden Doppelwellenextruder aufgeschmolzen. Über einen zweiten Dosiertrichter werden die Glasfasern (Komponenten B) in die Schmelze dosiert. Die Zylindertemperaturen werden dabei so gewählt, dass Massetemperaturen von 260 bis 300°C eingehalten werden. Der Schmelzestrang wird in Wasser eingeleitet, granuliert und getrocknet. Von den Formmassen werden auf einer Spritzgussmaschine Prüfkörper für die mechanische Prüfung hergestellt. Während der Spritzgussvorgang wird der benötigte Fülldruck ermittelt. An den Prüfkörper werden folgende Prüfungen durchgeführt. Zugversuch nach ISO 527, Biegeversuch nach ISO 178 sowie Schlagzähigkeit bei Raumtemperatur nach Izod (ISO 180/1U). Die Ergebnisse sind die nachfolgende Tabelle zu entnehmen:

### Materialprüfung:

| | | VB 1 | VB 2 | B 1 | B2 | B 3 | B4 | B 5 |
|---|---|---|---|---|---|---|---|---|
| Fülldruck | bar | 446 | -² | 155 | 183 | 124 | 173 | 174 |
| Schlagzähigkeit | kJ/m² | 84 | -² | 88 | 87 | 83 | 89 | 88 |
| Zug-Modul | MPa | 15530 | -² | 16330 | 16220 | 16680 | 16420 | 16190 |
| [-COOH] ^{1,} | meq/100g | 4,1 | -² | 16,9 | 13,7 | 19,2 | 16,2 | 15,3 |
| [-NH₂] ¹ | meq/100g | 4,3 | -² | 1,52 | 1,63 | 1,44 | 1,4 | 1,36 |
| Zugfestigkeit | MPa | 216 | -² | 249 | 243 | 251 | 251 | 248 |
| Biegemodul | MPa | 13630 | -² | 14310 | 13830 | 14310 | 14286 | 13940 |
| Biegefestigkeit | MPa | 329 | -² | 370 | 362 | 369 | 370 | 367 |
| MVR 260°C, 5 kg, 5 min Vorwärmzeit | cm³/10 min | 9 | -² | 47 | 36 | 48 | 41 | 36 |

| | | | | | | | | |
|---|---|---|---|---|---|---|---|---|
| 1: gemessen am Basisharz 2: keine Werte vorhanden, da Stabilfahrweise nicht erreicht wurde | | | | | | | | |

Aus den Ergebnissen geht deutlich hervor, dass die Formmassen enthaltend 2,2,6,6-TCCH als Kettenregler, verbesserten Fließeigenschaften zeigen gegenüber Formmassen ohne 2,2,6,6-TCCH, bei gleichbleibenden mechanischen Eigenschaften.

Eine kontinuierlichen Herstellung von Polyamiden mit verbesserten Fließeigenschaften mit 2,2,6,6-TCCH als Kettenregler ist daher erstmals möglich.

## Patentansprüche

1. Verfahren zur Herstellung von Polyamiden aus Lactamen und/oder Aminocarbonsäuren,
**dadurch gekennzeichnet, dass**
a) das Verfahren kontinuierlich betrieben wird und
b) 2,2,6,6-Tetra(β-carboxyethyl)-cyclohexanon
eingesetzt wird.

2. Verfahren zur Herstellung von Polyamiden gemäß Anspruch 1, **dadurch gekennzeichnet, dass** es sich um verzweigte Polyamide handelt.

3. Verfahren gemäß Anspruch 1 und/oder 2, **dadurch gekennzeichnet, dass** c) weitere Kettenregler, Starter und/oder Initiatoren eingesetzt werden.

4. Verfahren gemäß Anspruch 1 bis 3, wobei b) in Mengen zwischen 0,01 Mol-% und 1 Mol-% bezogen auf die eingesetzte Menge Monomer eingesetzt wird.

5. Verfahren gemäß Anspruch 1 bis 3, wobei b) in Mengen zwischen 0,1 Mol-% und 0,5 Mol-% bezogen auf die eingesetzte Menge Monomer eingesetzt wird.

6. Verfahren gemäß einer der Ansprüche 1 bis 5, **dadurch gekennzeichnet, dass** b) und gegebenenfalls c) als wässriger Lösung der Polymerisation zugeführt werden.

7. Verfahren gemäß einer der Ansprüche 1 bis 5, **dadurch gekennzeichnet, dass** b) oder gegebenenfalls c) als Lösung in einer Mischung aus Wasser und mindestens einem Lactam der Polymerisation zugeführt werden.

8. Verfahren gemäß einer der vorangegangenen Ansprüche, **dadurch gekennzeichnet, dass** die Lösung gemäß Anspruch 7 einer Druckstufe zugeführt wird.

9. Verfahren gemäß einer der vorangegangenen Ansprüche, wobei b) in Mengen zwischen 0,1 Mol-% und 0,5 Mol-%, und Adipinsäure in Mengen von 0,01 Mol-% bis 0,2 Mol-% bezogen auf die eingesetzte Menge Lactam und/oder Aminocarbonsäure eingesetzt werden.

10. Verfahren gemäß einer der vorangegangenen Ansprüche, wobei b) in Mengen zwischen 0,1 Mol-% und 0,5 Mol-%, und Propionsäure in Mengen von 0,01 Mol-% bis 0,2 Mol-% bezogen auf die eingesetzte Menge Lactam und/oder Aminocarbonsäure eingesetzt werden.

11. Verfahren gemäß einem der vorangegangenen Ansprüche, wobei es sich bei Lactam um Caprolactam handelt.

## Claims

1. Process for the preparation of polyamides from lactams and/or aminocarboxylic acids, **characterized in that**
a) the process is operated continuously and
b) 2, 2, 6, 6-tetra-(β-carboxyethyl)-cyclohexanone is used.

2. Process for the preparation of polyamides according to Claim 1, **characterized in that** the polyamides are branched polyamides.

3. Process according to Claims 1 and/or 2, **characterized in that** c) further chain regulators, starters and/or initiators are used.

4. Process according to Claims 1 to 3, b) being used in amounts between 0.01 mol% and 1 mol%, based on the amount of monomer used.

5. Process according to Claims 1 to 3, b) being used in amounts between 0.1 mol% and 0.5 mol%, based on the amount of monomer used.

6. Process according to any of Claims 1 to 5, **characterized in that** b) and optionally c) are fed to the polymerization as aqueous solution.

7. Process according to any of Claims 1 to 5, **characterized in that** bb) or optionally c) are fed to the polymerization as a solution in a mixture of water and at least one lactam.

8. Process according to any of the preceding claims, **characterized in that** the solution according to Claim 7 is fed to a pressure stage.

9. Process according to any of the preceding claims, b) being used in amounts between 0.1 mol% and 0.5 mol% and adipic acid in amounts of 0.01 mol% to 0.2 mol%, based on the amount of lactam and/or aminocarboxylic acid used.

10. Process according to any of the preceding claims, b) being used in amounts between 0.1 mol% and 0.5 mol% and propionic acid in amounts of 0.01 mol% to 0.2 mol%, based on the amount of lactam and/or aminocarboxylic acid used.

11. Process according to any of the preceding claims, the lactam being caprolactam.

## Revendications

1. Procédé de fabrication de polyamides à partir de lactames et/ou d'acides aminocarboxyliques,
**caractérisé en ce que :**
a) on réalise le procédé en mode continu, et
b) on utilise 2,2,6,6-tétra(β-carboxyéthyl)-cyclohexanone.

2. Procédé de fabrication de polyamides selon la revendication 1, **caractérisé en ce que** les polyamides sont des polyamides ramifiés.

3. Procédé selon la revendication 1 et/ou 2,
**caractérisé en ce que** l'on utilise c) d'autres régulateurs de chaîne, amorceurs et/ou initiateurs.

4. Procédé selon les revendications 1 à 3, dans lequel on utilise b) en quantités comprises entre 0.01 % en mole et 1 % en mole par rapport à la quantité de monomère utilisée.

5. Procédé selon les revendications 1 à 3, dans lequel on utilise b) en quantités comprises entre 0,1 % en mole et 0,5 % en mole par rapport à la quantité de monomère utilisée.

6. Procédé selon l'une quelconque des revendications 1 à 5, **caractérisé en ce que** l'on achemine b) et, éventuellement, c) sous forme de solution aqueuse à la polymérisation.

7. Procédé selon l'une quelconque des revendications 1 à 5, **caractérisé en ce que** l'on achemine à la polymérisation b) ou, éventuellement, c), sous la forme d'une solution constituée d'un mélange d'eau et d'au moins un lactame.

8. Procédé selon l'une quelconque des revendications précédentes, **caractérisé en ce que** la solution selon la revendication 7 est acheminée à un étage de pression.

9. Procédé selon l'une quelconque des revendications précédentes, dans lequel on utilise b) en quantités comprises entre 0,1 % en mole et 0,5 % en mole, et de l'acide adipique en quantités de 0,01 % en mole à 0,2 % en mole par rapport à la quantité de lactame et/ou d'acide aminocarboxylique utilisée.

10. Procédé selon l'une quelconque des revendications précédentes, dans lequel on utilise b) en quantités comprises entre 0,1 % en mole et 0,5 % en mole, et de l'acide propionique en quantités de 0,01 % en mole à 0,2 % en mole par rapport à la quantité de lactame et/ou d'acide aminocarboxylique utilisée.

11. Procédé selon l'une quelconque des revendications précédentes, dans lequel on utilise du caprolactame à titre de lactame.
